# EUROPEAN PATENT SPECIFICATION

(11) **EP 2 589 462 B1**
(45) Date of publication and mention of the grant of the patent: **02.07.2014**
(21) Application number: 12190131.8
(22) Date of filing: 26.10.2012
(51) Int. Cl.: B23Q 1/48, B23Q 39/02, A61C 13/00

(54) **Milling machine for dental prostheses**
Fräsmaschine für Zahnimplantate
Fraiseuse pour prothèses dentaires

(30) Priority: 03.11.2011 IT MI20111988
(43) Date of publication of application: 08.05.2013
(73) Proprietor: Dental Machine s.r.l., 29022 Bobbio (PC) (IT)
(72) Inventor: Losini, Franco, 29022 BOBBIO (PC) (IT)
(74) Representative: Zanellato, Gianluca

(56) References cited:
- DE-A1- 10 027 509
- DE-A1-102009 001 428
- DE-A1-102009 011 443

## Description

The present invention relates to a milling machine for dental prostheses

In particular, the present invention finds application in the formation of dental crowns, bars, bridges, implants and prostheses in general for odontotechnics use.

Milling machines for dental prostheses of known type are numerically controlled machines which carry out milling on portions of suitable material known as wafers.

The milling machines comprise a base and a wafer holding support fixed to the base, for retaining the wafer during machining.

Generally, the support comprises a fixed portion rigidly associated with the base, and a portion which is movable relative to the fixed portion and carries wafer retaining means. In greater detail, the movable portion rotates relative to the fixed portion about two mutually perpendicular axes of rotation, such as to cause the wafer being machined to rotate in space.

An operating tool is associated with the base by arms which translate relative to each other along three mutually perpendicular directions. In this manner the operating tool can be translated in space.

The combination of the tool translation movement and rotation movement imposed on the wafer by the support enables the wafer to be machined in every part, including undercuts.

Examples of such machines can be seen in the patents DE 10 2009 001428, on which the preamble of claim is based, or DE 10 2009 011443 and DE 100 27 509.

A drawback of milling machines of known type is that they do not enable quick machining, because one side of the wafer has to be machined at a time. In fact, with milling machines configured in this manner, the machining of the outer side of the dental prosthesis has necessarily to be carried out separately from the machining of its inner part.

In this context, the technical aim of the present invention is to propose a milling machine for dental prostheses which overcomes the stated drawbacks of the known art.

A particular object of the present invention is to provide a milling machine for dental prostheses able to carry out machining operations in reduced time.

The stated technical aim and the specified object are substantially attained by a milling machine for dental prostheses comprising the technical characteristics stated in one or more of the accompanying claims.

Further characteristics and advantages of the present invention will be more apparent from the indicative and hence non-limiting description of a preferred but non-exclusive embodiment of a milling machine for dental prostheses, as illustrated in the accompanying drawings, in which:
Figure 1 is a perspective view of a milling machine according to the present invention;

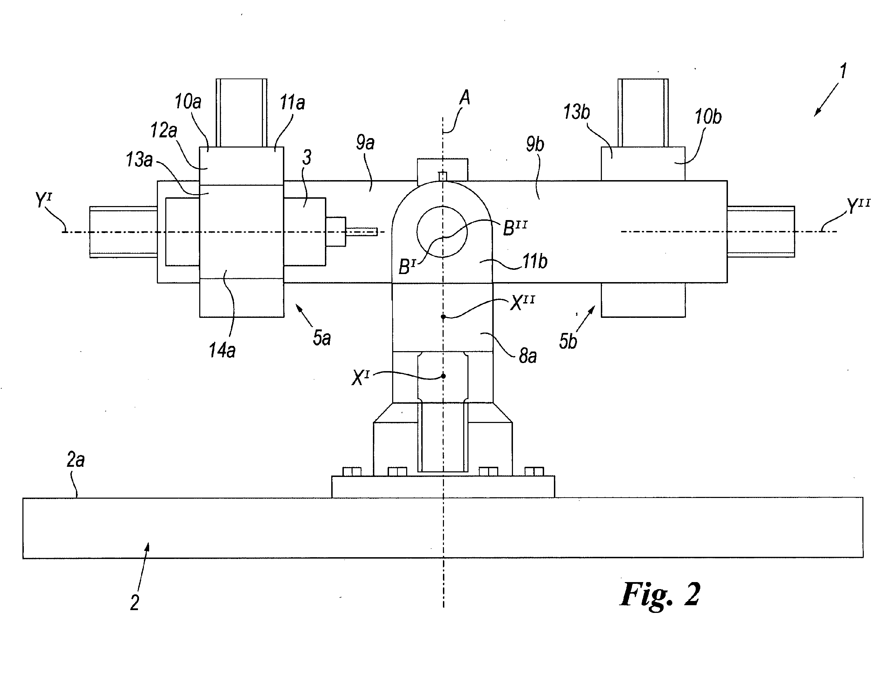

Figure 2 is a lateral view of the milling machine of Figure 1; and
Figure 3 is a perspective view of a detail of the milling machine of Figure 1.

With reference to the accompanying figures, the reference numeral 1 indicates overall a milling machine for dental prostheses in accordance with the present invention.

The milling machine 1 comprises a base 2 which rests on a floor. The base 2 is substantially of square or rectangular shape in plan and presents a flat upper surface 2a.

The milling machine 1 also comprises a first milling tool 3 and a second milling tool 4 associated with the base 2 and movable in space relative to the base 2.

In this respect translation members 5 are connected to the base 2 and are associated with the tools 3, 4 such as to enable these latter to translate in space.

The milling machine 1 also comprises rotation members 6a, 6b associated with the tools 3, 4 to cause them to rotate about at least two mutually perpendicular rotation axes A, B.

The milling machine 1 comprises at least one reception element 7 where a portion P of suitable material is positioned to be machined. The translation members 5 and the rotation members 6a, 6b hence enable the tools 3, 4 to move in space into proximity to the reception element 7.

Advantageously, the rotation members 6a, 6b act on the translation members 5 to determine rotation of the tools 3, 4. In other words, the rotation members 6a, 6b are integral with the translation members 5 in such a manner as to at least partially determine rotation of the translation members 5 in order to rotate the tools 3, 4 connected to the translation members 5.

In greater detail, the milling machine 1 comprises two translation members 5a, 5b, each associated with and connected to the first tool 3 and second tool 4 respectively, to translate the tools 3, 4 along their respective axes of translation.

Each translation member 5a, 5b comprises an articulated arm with at least two adjacent portions rotatable relative to each other.

Each translation member 5a, 5b comprises three slides 8a, 9a, 10a; 8b, 9b, 10b connected together and each positioned along respective translation axes X', Y', Z'; X", Y", Z".

The slides 8a, 9a, 10a; 8b, 9b, 10b are, for example, preferably rectilinear bars.

In addition, each translation member 5a, 5b comprises three slide blocks 11 a, 12a, 13a; 11 b, 12b, 13b each slidingly connected to the respective slide 8a, 9a, 10a; 8b, 9b, 10b.

In greater detail, each slide block 11 a, 12a, 13a; 11 b, 12b, 13b connects the slide on which it is slidingly connected to the adjacent slide or to the respective tool 3, 4.

In particular, a first slide 8a, 8b of each translation member 5a, 5b is mounted in a position corresponding with the upper surface 2a of the base 2 and parallel to it. The first slides 8 extend away from each other along respective first translation axes X', X".

A second slide 9a, 9b of each translation member 5a, 5b is connected to the respective first slide 8a, 8b and lies along a respective second translation axis Y', Y", each perpendicular to the corresponding first translation axis X', X".

A first slide block 11a, 11b of each translation member 5a, 5b is slidingly constrained to the respective first slide 8a, 8b. Each second slide 9a, 9b is engaged with the respective first slide block 11a, 11b such as to be connected to the respective first slide 8a, 8b. Drive means (not shown) act operatively on the first slide blocks 11 a, 11 b to cause the second slides 9a, 9b to translate along the respective first translation axes X', X".

A third slide 10a, 10b of each translation member 5a, 5b is connected to the respective second slide 9a, 9b and lies along a respective third translation axis Z', Z", each perpendicular to the corresponding first translation axis X', X" and to the corresponding second translation axes Y', Y".

The second slide block 12a, 12b of each translation member 5a, 5b is slidingly constrained to the respective second slide 9a, 9b. Each third slide 10a, 10b is engaged with the respective second slide block 12a, 12b such as to be connected to the respective second slide 9a, 9b. Drive means (not shown) act operatively on the second slide blocks 12a, 12b to cause the third slides 10a, 10b to translate along the respective second translation axes Y', Y".

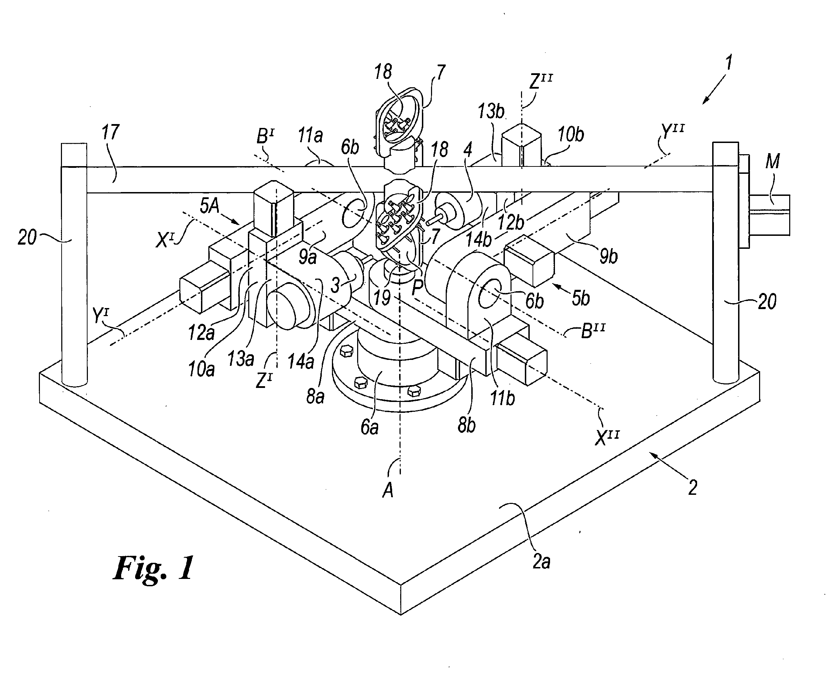

In Figure 1 the third slides 10a, 10b are shown integral with the respective second slide blocks 12a, 12b. In other embodiments, the third slides 10a, 10b are separate from the respective second slide blocks 12a, 12b.

The third slide block 13a, 13b of each translation member 5a, 5b is slidingly constrained to the respective third slide 10a, 10b.

Moreover, the first tool 3 and the second tool 4 are secured to respective gripping members 14a, 14b which are rigidly connected to the respective third slide blocks 13a, 13b.

Drive means (not shown) act operatively on the third slide blocks 13a, 13b to cause the first tool 3 and the second tool 4 to translate along the respective third translation axes Z', Z".

For example, these drive means can be recirculating screw shafts with an electronically controlled electric motor, or electronically controlled linear motors, or hydraulic or pneumatic actuators.

A first rotation member 6a is operatively positioned between the base 2 and the first slides 8a, 8b such as to rotate these latter about a first rotation axis A.

In greater detail, this first rotation axis A is perpendicular to the upper surface 2a of the base 2.

In other words, the first slides 8a, 8b are coupled together at their first ends, with the first rotation member 6a being connected to the first ends.

In this case, the first rotation axis A is aligned with the first ends of the first slides 8a, 8b.

Advantageously, the first rotation member 6a acts independently on the first slides 8a, 8b such that these latter are able to rotate at different angles and angular velocities.

Alternatively, two first rotation members 6a can be provided, each connected independently of the other to a respective first slide 8a, 8b such that these latter are able to rotate at different angles and angular velocities.

In addition, second rotation members 6b are operatively disposed between each first slide 8a, 8b and each second slide 9a, 9b such that the second slides 9a, 9b are able to rotate relative to the first slides 8a, 8b about respective second rotation axes B', B".

The second rotation axes B', B" are parallel to the respective first slides 8a, 8b and are consequently parallel to the respective first translation axes X', X".

In this respect, the second slides 9a, 9b are connected to the first slides 8a, 8b by a rotatable coupling.

For example, the first slide blocks 11 a, 11 b are pivoted to the second slides 9a, 9b. Respective motors (not shown) act on the second slides 9a, 9b to cause them to rotate. For example, these motors can be electronically controlled motors with a reducer, or electronically controlled motors with direct coupling, or hydraulic or pneumatic actuators.

With reference to the reception element 7 for the portion P to be machined, this comprises a flat part 15 of substantially quadrangular shape with rounded corners.

The flat part 15 presents centrally a through hole 16 defining a seat in which the portion P is fitted.

Preferably, the milling machine 1 comprises two reception elements 7.

The reception elements are preferably totally identical. However, in non-illustrated embodiments, they can be different from each other. The reception elements 7 are rigidly associated with each other and are alternately movable between an operative position in which one of them lies in a position corresponding with the tools 3, 4 while the other lies in a non-operative position, distal from the tools 3, 4. In further embodiments, the milling machine 1 can comprise even three or more of said reception elements 7. Again in that case they are rigidly associated with each other and alternately movable between an operative position in which one of them lies in a position corresponding with the tools 3, 4 while the others lie in a respective non-operative position, distal from the tools 3, 4.

In detail, a bar 17 is disposed above the base 2 and above the tools 3, 4. In other words, the bar 17 is in a position opposite the base 2 with respect to the tools 3, 4. The bar 17 is rotatably associated with the base 2. In detail, the bar 17 is rotatably fixed to two parallel brackets 20 mounted opposite each other on the base 2. Drive means M are associated with the bar 17 such as to cause it to rotate.

The reception elements 7 are rigidly fixed to the bar 17 such that, by rotating the bars 17, the reception elements 7 can be shifted from the operative position to the non-operative position and vice versa.

Consequently, while one reception element is in the operative position and the tools 3, 4 are machining, the other reception element 7 is in the non-operative position, used for unloading a machined piece and loading a new portion P.

When in use, the bar 17 is successively rotated through an adequate angle (depending on the number of reception elements 7) to bring the reception elements 7 alternately from the operative position to the non-operative position.

When the reception elements 7 for the material portion P to be machined are in the operative position, they are substantially aligned with the first rotation axis A. Moreover, while in this position, the reception elements 7 are also aligned with the second rotation axes B', B".

Advantageously, this enables the portion P to maintain a stable position during the movement - and in particular the rotation - of the slides 8a, 9a, 10a; 8b, 9b, 10b to hence achieve a considerable machining precision. Advantageously, a fixing centre 19 is maintained pressed against one side of the reception element 7 during machining, to further stabilize the portion P. The milling machine 1 also comprises at least one milling cutter holder 18 alternately movable between an operative position proximal to the tools 3, 4, and a non-operative position distal from the tools 3, 4.

In particular, the operative position of the milling cutter holder 18 coincides with the operative position of the reception element 7 such as to enable the tools 3, 4 to change the milling cutter according to the operative conditions.

Advantageously, the milling machine 1 comprises a plurality of milling cutter holders 18, each movable between an operative position in which it lies to correspond with the tools 3, 4 and in a non-operative position, distal from the tools 3, 4. In the illustrated embodiment, the milling machine 1 comprises two milling cutter holders 18, preferably identical. Alternatively, the milling cutter holders 18 can be different from each other.

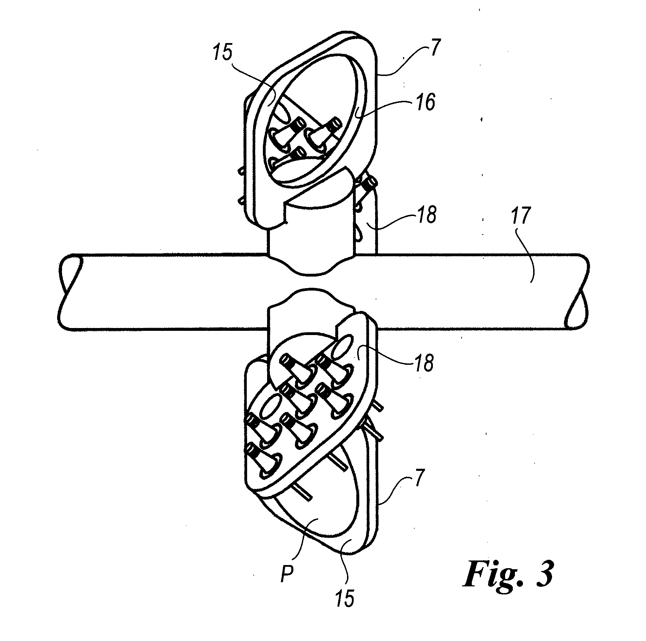

As shown in Figure 3, the milling cutter holders 18 are fixed to the bar 17 at 90° from the reception elements 7. More generally, depending on the number of reception elements 7 and of milling cutter holders 18, the milling cutter holders 18 are separated from the reception elements 7 by a suitable angle, equal to 360° divided by the scheduled number of reception elements 7 and milling cutter holders 18.

In detail, the milling cutter holders 18 are fixed to the bar 17 at the reception elements 7 for the material portion P to be machined.

The two reception elements 7 are fixed at 90° in accordance with Figure 3 or at a suitable angle, equal to 360° divided by the scheduled number of reception elements and milling cutter holders 18.

An electronic control system (not shown in the figures) is associated with the drive means and with the motors associated with the slide blocks 11 a, 12a, 13a; 11b, 12b, 13b for translating and rotating the sides 8a, 9a, 10a; 8b, 9b, 10b. In this manner, simultaneous milling can be handled on both faces of the material portion P for forming the prostheses, by using suitable software.

The invention described in this manner attains the proposed object.

In this respect, integrating the rotation members with the translation members enables the member dimensions to be reduced and consequently enables two tools to be positioned in the same milling machine, to operate simultaneously on the material portion. In this manner, the time required to complete the milling of the dental prosthesis is substantially halved, as it can be carried out on the two opposite sides of the portion.

Moreover, the milling machine of the present invention is advantageously extremely compact.

Again, the particular alignment of the rotation axes enables the wavy effect on the machined portion to be reduced, consequently increasing the machining precision.

## Claims

1. A milling machine for dental prostheses comprising:
- a base (2);
- a reception element (7) for a material portion (P) to be machined;
- a first tool (3) and a second tool (4) for machining said portion (P);
- translation members (5a, 5b) connected to the base (2) and each associated respectively with said first tool (3) and said second tool (4) to translate said tools (3, 4) along three mutually perpendicular respective translation axes (X', Y', Z'; X", Y", Z");
each translation member (5a, 5b) comprising at least one first slide (8a, 8b) and one second slide (9a, 9b) disposed respectively along a first translation axis (X', X") and a second translation axis (Y', Y") which are mutually perpendicular, each translation member (5a, 5b) also comprising a first slide block (11a, 11b) slidingly disposed on said first slide (8a, 8b) and being connected to said second slide (9a, 9b); **characterised in that** it comprises further
- first (6a) and second (6b) rotation members each associated with said first tool (3) and said second tool (4) to rotate said tools (3, 4) about at least two mutually perpendicular rotation axes (A, B', B");
said rotation members (6a, 6b) acting on said translation members (5a, 5b) to determine the rotation of the tools (3, 4);
and **in that** the first rotation members (6a) are operatively positioned between said base (2) and said first slides (8a, 8b) to cause said first slides (8a, 8b) to rotate about a first rotation axis (A).

2. A milling machine as claimed in claim 1, **characterised in that** each translation member (5a, 5b) comprises three connected-together slides (8a, 9a, 10a; 8b, 9b, 10b), preferably rectilinear, each disposed along a respective translation axis (X', Y', Z'; X", Y", Z"), and three slide blocks (11a, 12a, 13a; 11b, 12b, 13b), each slidingly associated with a respective slide (8a, 9a, 10a; 8b, 9b, 10b); said slide blocks (11a, 12a, 13a; 11b, 12b, 13b) being connected to a slide (8a, 9a, 10a; 8b, 9b, 10b) adjacent to the respective tool (3, 4).

3. A milling machine as claimed in claim 1, **characterised in that** each translation member (5a, 5b) further comprises a third slide (10a, 10b) disposed along a third translation axis (Z', Z") perpendicular to the second translation axis (Y', Y"), each translation member (5a, 5b) further comprising a second slide block (12a, 12b) slidingly disposed on said second slide (9a, 9b) and connected to said third slide (10a, 10b).

4. A milling machine as claimed in claim 3, **characterised in that** each translation member (5a, 5b) comprises a third slide block (13a, 13b) slidingly disposed on said third slide (10a, 10b), and a gripping member (14a, 14b) secured to said third slide block (13a, 13b); said first tool (3) and said second tool (4) being secured to the respective gripping members (14a, 14b).

5. A milling machine as claimed in claim 1, **characterised in that** the second rotation members (6b) are operatively disposed between each first slide (8a, 8b) and each second slide (9a, 9b) to enable said second slides (9a, 9b) to rotate about respective second rotation axes (B', B") parallel to the corresponding first translation axes (X', X").

6. A milling machine as claimed in any one of the preceding claims, **characterised in that** said first slides (8a, 8b) are connected together at their first ends; said first rotation member (6a) being associated with said first ends of said first slides (8a, 8b); said first rotation axis (A) being aligned with said first ends of said first slides (8a, 8b).

7. A milling machine as claimed in any one of claims from 3 to 6, **characterised in that** said reception element (7) for material portion (P) to be machined is substantially aligned with said first rotation axis (A).

8. A milling machine as claimed in any one of the preceding claims, **characterised in that** said reception element (7) is movable between an operative position proximal to said tools (3, 4) and a non-operative position distal from said tools (3, 4).

9. A milling machine as claimed in claim 8, **characterised by** comprising at least one milling cutter holder (18) movable alternately between an operative position proximal to said tools (3, 4), and a non-operative position distal from said tools (3, 4).

10. A milling machine as claimed in claim 8 or 9, **characterised by** comprising a bar (17) disposed in a position opposite the base (2) with respect to the tools (3, 4), said reception element (7) and/or said milling cutter holder (18) being rigidly secured to said bar (17); said bar (17) being rotatable to enable said reception element (7) and/or said milling cutter holder (18) to reach said operative and non-operative positions.

## Patentansprüche

1. Fräsmaschine für Zahnimplantate umfassend:
- eine Grundfläche (2);
- ein Empfangselement (7) für einen zu bearbeitenden Stoffteil (P);
- ein erstes Werkzeug (3) und ein zweites Werkzeug (4) zur Bearbeitung des genannten Teils (P);
- Translationselemente (5a, 5b) die mit der Grundfläche (2) verbunden sind, jeweils an dem genannten ersten Werkzeug (3) und an dem genannten zweiten Werkzeug (4) angeschlossen, um die genannten Werkzeuge (3, 4) nach der Länge von drei entsprechenden, zueinander senkrechten Translationsachsen (X', Y', Z'; X", Y", Z") zu verschieben;
jedes Translationselement (5a, 5b) umfassend mindestens eine erste Rutsche (8a, 8b) sowie eine zweite Rutsche (9a, 9b), die nach der Länge einer ersten Translationsachse (X', X") beziehungsweise einer zweiten Translationsachse (Y', Y") angeordnet sind und die senkrecht zueinander sind, jedes Translationselement (5a, 5b) unfassend auch eine erste Rutschensperre (11a, 11b), die an der genannten ersten Rutsche (8a, 8b) verschiebbar angeordnet ist und die mit der genannten zweiten Rutsche (9a, 9b) verbunden ist; **dadurch gekennzeichnet, dass** sie weiter erste (6a) sowie zweite (6b) Drehungselemente umfasst, die jeweils an dem genannten ersten Werkzeug (3) und an dem genannten zweiten Werkzeug (4) angeschlossen sind, um die genannten Werkzeuge (3, 4) um mindestens zwei zueinander senkrechten Drehungsachsen (A, B', B") zu drehen; wobei die genannten Drehungselemente (6a, 6b) an die genannten Translationselemente (5a, 5b) handeln, um die Drehung der Werkzeuge (3, 4) zu bestimmen;
und dass
die ersten (6a) Drehungselemente zwischen der genannten Grundfläche (2) und den genannten ersten Rutschen (8a, 8b) operativ angeordnet sind, um die genannten ersten Rutschen (8a, 8b) um eine erste Drehungsachse (A) zu drehen.

2. Fräsmaschine nach Anspruch 1, **dadurch gekennzeichnet, dass** jedes Translationselement (5a, 5b) drei, miteinander verbundene, vorzugsweise geradlinige Rutschen (8a, 9a, 10a; 8b, 9b, 10b), die nach der Länge einer entsprechenden Translationsachse (X', Y', Z'; X", Y", Z") angeordnet sind, sowie drei Rutschensperren (11a, 12a, 13a; 11b, 12b, 13b), jede an einer entsprechenden Rutsche (8a, 9a, 10a; 8b, 9b, 10b) verschiebbar angeschlossen, umfasst; wobei die genannten Rutschensperren (11a, 12a, 13a; 11b, 12b, 13b) mit einer Rutsche (8a, 9a, 10a; 8b, 9b, 10b) verbunden sind, die an dem entsprechenden Werkzeug (3, 4) anliegend ist.

3. Fräsmaschine nach Anspruch 1, **dadurch gekennzeichnet, dass** jedes Translationselement (5a, 5b) weiter eine dritte Rutsche (10a, 10b) umfasst, die nach der Länge einer dritten Translationsachse (Z', Z"), zu der zweiten Translationsachse (Y', Y") senkrecht angeordnet ist, jedes Translationselement (5a, 5b) weiter umfassend eine zweite Rutschensperre (12a, 12b), die an der genannten zweiten Rutsche (9a, 9b) verschiebbar angeordnet und mit der genannten dritten Rutsche (10a, 10b) verbunden ist.

4. Fräsmaschine nach Anspruch 3, **dadurch gekennzeichnet, dass** jedes Translationselement (5a, 5b) eine dritte Rutschensperre (13a, 13b), die an der genannten dritten Rutsche (10a, 10b) verschiebbar angeordnet ist, sowie ein Handgreifelement (14a, 14b), das an der genannten dritten Rutschensperre (13a, 13b) befestigt ist, umfasst; wobei das genannte erste Werkzeug (3) und das genannte zweite Werkzeug (4) an den entsprechenden Handgreifelementen (14a, 14b) befestigt sind.

5. Fräsmaschine nach Anspruch 1, **dadurch gekennzeichnet, dass** die zweiten Drehungselemente (6b) zwischen jeder ersten Rutsche (8a, 8b) und jeder zweiten Rutsche (9a, 9b) operativ angeordnet sind, um die genannten zweiten Rutschen (9a, 9b) zu ermöglichen, um den entsprechenden zweiten Drehungsachsen (B', B") parallel zu der entsprechenden ersten Translationsachsen (X', X") zu drehen.

6. Fräsmaschine nach irgendeinem der vorangegangenen Ansprüche, **dadurch gekennzeichnet, dass** die genannten ersten Rutschen (8a, 8b) an ihren ersten Enden miteinander verbunden sind; wobei die genannten ersten Drehungselemente (6a) an den genannten ersten Enden der genannten ersten Rutschen (8a, 8b) angeschlossen sind; wobei die genannten Drehungsachsen (A) mit den genannten ersten Enden der genannten ersten Rutschen (8a, 8b) gleichgerichtet sind.

7. Fräsmaschine nach irgendeinem der Ansprüche 3 bis 6, **dadurch gekennzeichnet, dass** das genannte Empfangselement (7) für einen zu bearbeitenden Stoffteil (P) grundsätzlich mit der genannten ersten Drehungsachse (A) gleichgerichtet ist.

8. Fräsmaschine nach irgendeinem der vorangegangenen Ansprüche, **dadurch gekennzeichnet, dass** das genannte Empfangselement (7) zwischen einer operativen Stellung in der Nähe der sogenannten Werkzeuge (3, 4) und einer nicht-operativen Stellung in einer Abstand von den genannten Werkzeugen (3, 4) bewegbar ist.

9. Fräsmaschine nach Anspruch 8, **dadurch gekennzeichnet, dass** sie mindestens einen Fräserhalter (18) umfasst, der zwischen einer operativen Stellung in der Nähe der sogenannten Werkzeuge (3, 4) und einer nicht-operativen Stellung in einer Abstand von den genannten Werkzeugen (3, 4) wechselnd bewegbar ist.

10. Fräsmaschine nach Anspruch 8 oder 9, **dadurch gekennzeichnet, dass** sie eine Stange (17) umfasst, die gegenüber der Grundfläche (2) unter Beachtung von den Werkzeugen (3, 4) angeordnet ist, wobei das genannte Empfangselement (7) und/oder der genannte Fräserahlter (18) an der genannten Stange (17) steif befestigt sind; wobei die genannte Stange (17) drehbar ist, um das genannte Empfangselement (7) und/oder den genannten Fräserhalter (18) zu ermöglichen, die genannten operativen und nicht-operativen Stellungen zu erzielen.

## Revendications

1. Fraiseuse pour prothèses dentaires comprenant:
- une base (2);
- un élément de réception (7) pour une partie (P) de matériau à usiner;
- un premier outil (3) et un deuxième outil (4) pour usiner ladite partie (P);
- éléments de translation (5a, 5b) reliés à la base (2), chacun associé respectivement audit premier outil (3) et audit deuxième outil (4) pour translater lesdits outils (3, 4) le long de trois axes de translation respectifs réciproquement perpendiculaires l'un à l'autre (X', Y', Z'; X", Y" , Z") ;
chaque élément de translation (5a, 5b) comprenant au moins une première goulotte (8a, 8b) et une deuxième goulotte (9a, 9b) situées respectivement le long d'un premier axe de translation (X', X") et le long d'un deuxième axe de translation (Y', Y") qui sont réciproquement perpendiculaires l'un à l'autre, chaque élément de translation (5a, 5b) comprenant aussi un premier blocage de goulotte (11a, 11b) placé de manière coulissante sur ladite première goulotte (8a, 8b) et étant relié à ladite deuxième goulotte (9a, 9b); **caractérisée en ce qu'**elle comprend aussi des premiers (6a) et des deuxièmes (6b) éléments de rotation, chacun associé audit premier outil (3) et audit deuxième outil (4) pour tourner lesdits outils (3, 4) autour d'au moins deux axes de rotation réciproquement perpendiculaires l'un à l'autre (A, B', B"); lesdits éléments de rotation (6a, 6b) agissant sur lesdits éléments de translation (5a, 5b) pour déterminer la rotation des outils (3, 4);
et **en ce que**
les premiers éléments de rotation sont opérationnellement positionnés entre ladite base (2) et lesdites goulottes (8a, 8b), pour faire tourner lesdites goulottes (8a, 8b) autour d'un premier axe de rotation (A).

2. Fraiseuse selon la revendication 1, **caractérisée en ce que** chaque élément de translation (5a, 5b) comprend trois goulottes interconnectées (8a, 9a, 10a; 8b, 9b, 10b), de préférence rectilignes, chacune placée le long d'un axe de translation respectif (X', Y', Z'; X", Y", Z"), aussi bien que trois blocages de goulotte (11a, 12a, 13a; 11b, 12b, 13b), chacun associé de manière coulissante à une goulotte respective (8a, 9a, 10a; 8b, 9b, 10b); lesdits blocages de goulotte (11a, 12a, 13a; 11b, 12b, 13b) étant reliés à une goulotte (8a, 9a, 10a; 8b, 9b, 10b) adjacente à l'outil (3, 4) respectif.

3. Fraiseuse selon la revendication 1, **caractérisée en ce que** chaque élément de translation (5a, 5b) comprend aussi une troisième goulotte (10a, 10b) placée le long d'une troisième axe de translation (Z', Z") perpendiculaire au deuxième axe de translation (Y', Y"), chaque élément de translation (5a, 5b) comprenant aussi un deuxième blocage de goulotte (12a, 12b) placé de manière coulissante sur ladite deuxième goulotte (9a, 9b) et relié à ladite troisième goulotte (10a, 10b) .

4. Fraiseuse selon la revendication 3, **caractérisée en ce que** chaque élément de translation (5a, 5b) comprend un troisième blocage de goulotte (13a, 13b) placé de manière coulissante sur ladite troisième goulotte (10a, 10b), aussi bien qu'un élément de préhension (14a, 14b) fixé audit troisième blocage de goulotte (13a, 13b); ledit premier outil (3) et ledit deuxième outil (4) étant fixés aux éléments de préhension (14a, 14b) respectifs.

5. Fraiseuse selon la revendication 1, **caractérisée en ce que** les deuxièmes éléments de rotation (6b) sont opérationnellement positionnés entre chaque première goulotte (8a, 8b) et chaque deuxième goulotte (9a, 9b) pour permettre auxdites deuxièmes goulottes (9a, 9b) de tourner autour de deuxièmes axes de rotation (B', B") respectifs, parallèles aux premiers axes de translation (X', X") correspondants.

6. Fraiseuse selon l'une quelconque des revendications précédentes, **caractérisée en ce que** lesdites premières goulottes (8a, 8b) sont interconnectées à leurs premières extrémités; ledit premier élément de rotation (6a) étant associé auxdites premières extrémités desdites premières goulottes (8a, 8b); ledit premier axe de rotation (A) étant aligné auxdites premières extrémités desdites premières goulottes (8a, 8b).

7. Fraiseuse selon l'une quelconque des revendications de 3 à 6, **caractérisée en ce que** ledit élément de réception (7) pour une partie (P) du matériau à usiner est essentiellement aligné audit premier axe de rotation (A).

8. Fraiseuse selon l'une quelconque des revendications précédentes, **caractérisée en ce que** ledit élément de réception (7) est mobile entre une position opérationnelle en proximité desdits outils (3, 4) et une position non-opérationnelle à une distance desdits outils (3, 4).

9. Fraiseuse selon la revendication 8, **caractérisée en ce qu'**elle comprend au moins une porte-fraise (18) mobile alternativement entre une position opérationnelle en proximité desdits outils (3, 4) et une position non-opérationnelle à une distance desdits outils (3, 4).

10. Fraiseuse selon la revendication 8 ou 9, **caractérisée en ce qu'**elle comprend une barre (17) placée dans une position opposée à la base (2) par rapport aux outils (3, 4), ledit élément de réception (7) et/ou ledit porte-fraise (18) étant rigidement fixés à ladite barre (17); ladite barre (17) étant pivotable pour permettre audit élément de réception (7) et/ou audit porte-fraise (18) d'atteindre lesdites positions opérationnelle et non-opérationnelle.
